# EUROPEAN PATENT APPLICATION

(11) **EP 4 123 452 A1**
(43) Date of publication of application: **25.01.2023**
(21) Application number: 22186508.2
(22) Date of filing: 22.07.2022
(51) Int. Cl.: G06F 9/50

(54) **A CLOUD PLATFORM CONFIGURATOR**

(30) Priority: 23.07.2021 NL 2028823
(71) Applicant: Eshgro B.V., 5831 PE Boxmeer (NL)
(72) Inventor: LOEFFEN, Antonius Theodorus Johannes Maria, BOXMEER (NL)
(74) Representative: Algemeen Octrooi- en Merkenbureau B.V.

(57) **Abstract**

The present invention generally relates to providing a method of, and system for, generating a cloud configuration scheme for automatically setting up a cloud platform and defining resource allocation thereof. Accordingly, a method is provided of enabling one or more users to configure, employ and manage a cloud environment for providing cloud based services to a plurality of users of said cloud environment, said method being performed in a computer network comprising at least one client computer and at least one remote server, comprising step of obtaining, a list of resources of said at least one remote server, categorizing, said list, configuring for each of a second list, and a weight factor defining an allocation requirement for elements of said first list, and said third list, generating a cloud configuration scheme with respective weight factors and measuring resource allocation usage of at least one cloud environment set-up through said cloud configuration scheme, and updating said weight factor upon detecting said resource allocation usage exceeds a predefined threshold.

## Description

### FIELD OF THE INVENTION

The present invention generally relates to providing a method of, and system for, generating a cloud configuration scheme for automatically setting up a cloud platform and defining resource allocation thereof.

### BACKGROUND OF THE INVENTION

Cloud services are known for a number of years now. With the ever evolving availability of high bandwidth computer networks, the impact and size of cloud service is considered to increase even more over the years to come.

Plural companies have already migrated from full or mostly full local use of hardware and software towards internet-based solutions wherein functionality is provided to client computers in the form of applications running on remote (virtual) server(s).

One of the advantages of such cloud computing is that resources can be shared. In accordance with demand, resources can be accessed on-demand from a shared pool of configurable computing resources, amongst which network capacity, server computation capacity, storage capacity, and so on.

Another advantage is that management and billing is simplified since companies not needing to maintain their own servers, e.g. hardware and software running thereon, and aren't responsible anymore for requirements and maintenance to keep certain conventional and legacy software applications up and running.

In the process of migrating towards the cloud inventory's have to be made of current software applications as well as other non-physical conditions like business requirements, guarantied uptime, security level, support and maintenance, but also compliance and costs. The outcome of the inventory is a list of demands. This list of demands needs to be converted into a cloud platform scheme to setup the cloud environment according to these demands. This is not only very challenging, since this list implies all kinds of dependences between hardware resources, software applications, client devices and also intra-dependencies between hardware, applications and client devices as well. The result is that current cloud-based environments are mostly setup based on a cloud platform scheme which is engineered to order, i.e. created manually or at least mostly manually. The way the scheme is setup and its effectiveness is mostly based on the skills and experience of the technician setting up the cloud environment.

Amongst others, such manual configuration prevents efficient employment of the cloud environment. Moreover, it has been found out, that such employment often leads to non-optimal use of the resources of the environment. In particular, hardware and software resources are over-allocated, over-dimensioned, or even under-allocated and under-dimensioned, which results in inefficient use of limited resources which is amongst other reasons highly undesirable from a costs perspective.

### SUMMARY OF THE INVENTION

Accordingly, it is an object of the present disclosure, to provide an improved method of enabling one or more users to configure, employ and manage a cloud environment for providing cloud based services to a plurality of users of said cloud environment, by which method the resources are allocated in a more sophisticated and efficient manner.

This object is achieved, through a first aspect of the present disclosure, by providing a method of enabling one or more users to configure, employ and manage a cloud environment for providing cloud-based services to a plurality of users of said cloud environment, said method being performed in a computer network comprising at least one client computer and at least one remote server, said method comprising the steps of:
- obtaining, by said remote computer, a list of resources of said at least one remote server;
- categorizing, by said remote computer, said list of resources in a first list of server resources comprising a plurality of server-elements defining at least a predetermined amount of CPU, memory, storage and network capacity resources, as well as a second list of cloud based application resources comprising a plurality of requirement-elements defined by said cloud based applications, and a third list of client resources comprising a plurality of client-elements defining at least a predetermined amount of CPU, memory, storage and network capacity resources;
- configuring, by said remote computer, for each of said requirement-elements of said second list, a weight factor defining an allocation requirement for said server-elements of said first list, and said client-elements of said third list;
- generating, by said remote computer, a cloud configuration scheme for employing said cloud environment wherein said cloud configuration scheme comprises a plurality of functional building blocks each comprising a plurality of logical building blocks, each of said logical building blocks comprising a plurality of capacity building blocks, and wherein said capacity building blocks define at least said plurality of server-elements of said first list, wherein said the amount of resources of said plurality of server-elements of said first list are allocated on the basis of said respective weight factor;
- measuring, by said remote server, resource allocation usage of at least one cloud environment set-up through said cloud configuration scheme; and
- updating, by said remote server, said weight factor upon detecting said resource allocation usage exceeds a predefined threshold.

Cloud computing is beneficial in many ways. With the exponential increase in data usage and software application it is becoming more and more challenging for individuals and organizations to keep all data, software applications and hardware up and running from internal computer servers.

Cloud computing provides the user and the organization the ability to use the software applications with all functions needed, and keep data stored and safe without having to setup, store and maintain most of this in their own server environments.

Especially in modern day work environments cloud computing takes a central role as it enables users to use all applications and access al data without restriction on location and even without restriction on client device. Given the correct permissions, users are allowed to use multiple client devices from any location. With cloud computing it is becoming easier and safer to work from several client device.

Within cloud computing software as a service, SaaS, is increasing in popularity. Software applications are bundled in packages and provided to the user in the form of a complete SaaS in which requirements and security aspects are also setup correctly.

The number of locally installed applications or applications running from local servers which are migrated towards a cloud computing platform is rapidly increasing. Not only software applications from one particular supplier which have the tendency to work seamlessly together and from the cloud, but also non-cloud-native applications need to be migrated. Security of the overall system including all applications and data is not only a challenge with such strong increase in applications being migrated, but this also applies to integrated management. It is therefore a goal to have an employee register for all applications at once and that it would also be possible to block a certain ex-employee for all access to any of the applications being registered upon leaving. This also applies to single employees or even groups of employees changing function with an organization.

Configuring, employing and managing a cloud environment which meets these requirements is a big challenge for modern day workplaces. Moreover, keeping track and control of costs is also challenging.

These challenges gave the inventors the insight a next level cloud environment should be able to be configurated, employed and managed in such a way that the complexity is reduced significantly. Configuration, employment and management should ideally be done by the organization themselves, without detracting from the requirements that the software packages and data place on the migration and for which traditionally an experienced software technician was required for configuration, employment and management.

Even when such configuration, employment and management would be done in a traditional manner by an experienced software technician, it still wouldn't be ideal for several reasons. Firstly, the amount of software applications, data and associated dependencies is becoming so great that the system to be set up becomes so complex that it is challenging even for an experienced technician. Second, there is a great risk of over-dimensioning or under-dimensioning the required server elements such as CPU, memory and storage capacity. This can result in either too large investments and costs, or a risk that certain applications will not work or will not work optimally due to a shortage of resources. Third, it is extremely challenging to adapt a system once it has been setup.

Modern organizations however demand a high degree of flexibility because their needs are constantly changing. Companies grow, employees are hired, are given new functions, leave the company, need new software applications, etc. etc. All these changes are extremely challenging for a system administrator. Making such adjustments takes a lot of time and is complex.

With the proposed method to configure, employ and manage a cloud environment for providing cloud-based services to a plurality of users of said cloud environment, such drawbacks are reduced or even completely resolved. What is proposed is a method which enables one or more users to configure, employ and manage a cloud environment for providing cloud based services to a plurality of users of said cloud environment, wherein the method is being performed in a computer network comprising at least one client computer and at least one remote server. The method comprises several steps. In the first step, a list of resources of the remote server is obtained. Obtaining is to be interpreted in a broad sense, meaning that the server resources could be obtained automatically from the server itself, or added in one way or the other through manual input.

In the second step the remote computer categorizes the list of resources in a first and at least a second list. The first list comprises a plurality of server-elements defining at least a predetermined amount of CPU, memory, storage, but also licenses and security resources. The second list are cloud based application resources comprising a plurality of requirement-elements defined by said cloud based applications. Most applications have specific requirements such as a particular operating system, minimum CPU, memory and storage capacity or even other requirements such as network bandwidth.

In the third step the remote computer configures for each of the requirement-elements of the second list, a weight factor. The weight factor is a major aspect in the proposed method since it adds to automating the skills and experience of the software technician in defining allocation requirement of the server-elements of said first list for the applications in the second list.

In the fourth step, a could configuration scheme it generated for employing the cloud environment. The cloud configuration scheme comprises a plurality of functional building blocks each comprising a plurality of logical building blocks, each of the logical building blocks comprising a plurality of capacity building blocks. The capacity building blocks define at least the plurality of server-elements of the first list, wherein the amount of resources of the plurality of server-elements of the first list are allocated on the basis of the respective weight factor. That way the generated cloud scheme is setup in a modular manner in which smaller building blocks may be used to form larger building block and so on. By using the modular building blocks and the weight factors included therein, it not only becomes very easy to set up a cloud platform, but also minimizes the risk of under dimensioning and over dimensioning due to the weight factors. Finally, it will be possible to adjust certain parts of the platform quickly and easily in this way.

If for example, it is decided within an organization that certain tasks of a financial department will from now on be handled internally, and as a result there is a strong increase in the need for more capacity of that application, a building block can easily be adapted or added without affecting the correct operation of the rest of the applications running on the same platform and without the need of extensive adjustments to the entire system.

In the next step, the remote server is either at set times or constantly measuring resource allocation usage of the cloud environment set-up through said cloud configuration scheme. The measuring is used to improve the weight factors which in the next step are updated if the remote server is detecting said resource allocation usage to exceed a predefined threshold. This enable the system to also use predefined initial weight factors which might even be set, initially, manually, and once set, corrected over time by the server. This way the process is self-correcting and when used in an iterating manner, constantly improving.

In an example, the step of measuring, by the remote server, comprises measuring the resource allocation usage of at least one cloud environment set-up through said cloud configuration scheme; and the step of updating, by the remote server, comprises updating the weight factor upon in accordance with said measured resource allocation usage, comprises applying a dynamic algorithm which is constantly improved. In particular, the algorithm is managed, upgraded or corrected trough a learning routine. To this end, in an example, a cloud scaler is provided which configures the cloud environment in a scalable and responsive manner, e.g. predictively or reactively. The scaler may be configured or controlled through a runtime platform and preferably corresponding infrastructure automation to scale the amount of infrastructure resources needed in accordance with said measurement of the resource allocation.

In an example, the scaler may comprise an artificial intelligence and more particularly a machine learning routine that enables scaling such that the computing resources are used in a more efficient manner.

In particular, the machine learning routine may use historical data in combination with actual data, e.g. measurements of the previous step. Bulk historical data may be used to train the routine or algorithm whereas actual data may be used to further improve the routine.

More preferably, the functional business requirements may be optimized by the machine learning routines through a layered concept. More specifically, these function business requirements may comprise multiple building blocks. With the machine learning routine the composition of the building blocks may be optimized. Each building block may consist of a logical building block whereas each such logical building block may comprise components or logical components wherein each of such components may be further optimized through the machine learning routine. On other words, functional business requirements may be optimized through layered machine learning routines on specific logic building blocks within the scope of said business requirements plus the scope of the logical components within the scope of the logical building blocks within the scope of said functional business requirements.

With the machine learning routine the optimization, e.g. through the above mentioned scaler, may dynamically scale, e.g. scale up and scale down, the components, and building blocks within the cloud environment. That way resource utilization is monitored and corrected where needed. In an example, the scaler may also apply prioritization in order to set certain building blocks and/or components at a higher or lower lever to prioritize them above or below other blocks and/or components. Preferably, each of these steps are logged in log-files or a database for further analysis by the machine learning routines/scaler or use in further applications or future use of the routines/scaler in similar environments.

In an example, said first list of server resources may comprise hardware server resources or virtual server resources, and further comprises a predefined network bandwidth limit.

In an example, said list of resources is further categorized by said remote computer in a third list of client resources comprising client hardware resources or client virtual resources and further comprising a plurality of client-elements defining at least a predetermined amount of CPU, memory, storage and network bandwidth resources but preferably also licenses and security resources.

In an example, said step of measuring comprises:
- measuring, by said remote server, resource allocation usage of at least one of said plurality of server-elements of said first list.

In an example, said step of updating further comprises:
- updating, by said remote server, a respective weight factor upon detecting said resource allocation usage corresponding to said respective weight factor to exceed a predefined threshold.

In an example, said step of updating comprises iterated steps of updating in which said weight factor is stepwise increased or decreased.

In an example, said step of updating further comprises:
- adapting, by said remote server, said capacity building blocks for increased accuracy of estimated resource allocation based on said historical comparison of said used resource allocation of said set-up cloud platform with said estimated resource allocation, and wherein in particular said estimated resource allocation is increased for one or more of the group consisting of: physical but preferably virtual CPU, memory, storage and network capacity resources.

In an example, said functional building blocks further define software application vendor specific technical dependencies for operating said software application, as well as associated licensing and billing specifications.

In an example, said logical building blocks further define operating system specific technical dependencies for operating said operating system, as well as associated licensing and billing specifications.

In an example, said capacity building blocks further define host operating system specific technical dependencies for operating said host operating system, as well as associated licensing and billing specifications.

In a second aspect of the present disclosure a computer program product is proposed which is loadable into non-volatile internal memory of a mobile communication device, wherein said computer program product comprises computer program code arranged for performing the method according to claim 1, and wherein said computer program product is preferably downloadable from a server of a telecommunication network.

In a third aspect of the present disclosure, an electrical carrier signal is proposed which is comprising the computer program product according to the second aspect.

In a fourth aspect of the present disclosure, a computer-readable non-volatile storage medium is proposed which is comprising computer program code arranged for performing the method according the first aspect.

In a fifth aspect of the present disclosure, a communication device is proposed such as a smart phone, tablet, laptop or personal computer comprising non-volatile internal memory for storing and executing a computer program comprising computer program code configured for communication with a server for performing the method according to the first aspect.

In a sixth aspect of the present disclosure, a digital distribution platform server for software on a communication device, wherein said platform comprises a non-volatile memory, being arranged for distribution of an application comprising a computer program product which comprises computer program code arranged for performing the method according the first aspect.

The skilled person will appreciate that all examples and advantages of the first aspect of the present disclosure are equally applicable for the second aspect of the present disclosure.

The subject disclosure is now described with reference to the drawings, wherein like reference numerals are used to refer to like elements throughout the description.

### BRIEF DESCRIPTION OF THE DRAWINGS

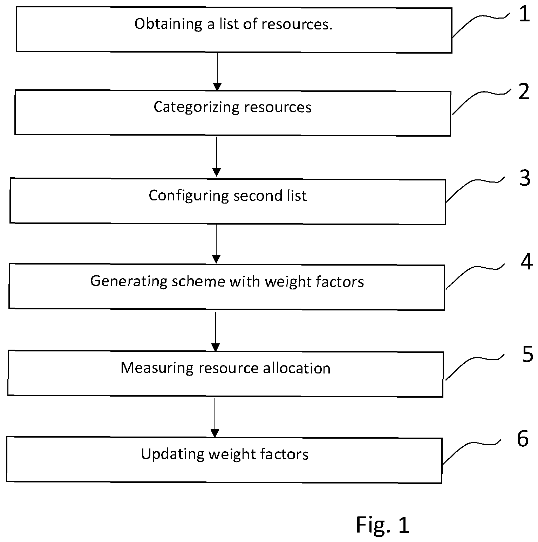

Fig. 1 shows the step of the method of the present disclosure according to a first aspect.

### DETAILED DESCRIPTION OF THE INVENTION

Cloud computing and cloud technologies are becoming more and more popular and mature. Sharing of resources and optimization of resource allocation is key in cloud computing as the resources can be accessed and allocated from a shared resource pool of server computation capacity, storage capacity, memory capacity, network bandwidth and so on. Not only from a hardware perspective cloud computing prevails but it also has further configuration and application-based advantages such as simplified and optimized maintenance, management and billing.

Upon migrating traditional applications or legacy applications to the cloud environment these advantages apply, but these advantages also apply on migrating software hosted by independent software vendors or software as a service to the cloud environment.

According to all aspects of the present disclosure a method is provided to enabling one or more users to configure, employ and manage a cloud environment for providing cloud-based services to a plurality of users of said cloud environment, by which method the resources are allocated in a more sophisticated and efficient manner.

This is achieved, as shown in Fig. 1, by in step 1, obtaining, by a remote computer, a list of resources of said at least one remote server. Subsequently, in step 2, the remote computer categorizes the resources in a first list of server resources, e.g. physical hardware server resources or virtual server resources. These resources comprise a plurality of server-elements defining at least a predetermined amount of CPU, memory, storage and network capacity resources, as well as a second list of cloud-based application resources comprising a plurality of requirement-elements defined by the cloud based applications.

Also, a third list is comprised therein which list comprises client resources e.g. physical hardware client resources or virtual client resources with a plurality of client-elements defining at least a predetermined amount of CPU, memory, storage and network capacity resources.

Next, in step 3, the remote computer configures, for each of the requirement-elements of the second list, a weight factor defining an allocation requirement for the server-elements of the first list, and the client-elements of the third list.

In step 4, the remote computer generates a cloud configuration scheme for employing said cloud environment wherein the cloud configuration scheme comprises a plurality of functional building blocks each comprising a plurality of logical building blocks.

Each of these logical building blocks comprising a plurality of capacity building blocks, and wherein the capacity building blocks define at least the plurality of server-elements of the first list. The amount of resources of the plurality of server-elements of the first list are then allocated on the basis of the respective weight factor.

Once the cloud scheme is generated, the remote server measures, in step 5, the resource allocation usage of at least one cloud environment set-up through the cloud configuration scheme.

Finally, in the last step 6, the remote server updates the weight factor upon detecting that the resource allocation usage exceeds a predefined threshold.

With the method, when implemented by a computer such as a server, a plurality of servers, and/or one or more client computers, a cloud configuration scheme can be generated in a more optimized manner. With this scheme a cloud platform can be set-up or provisioned automatically or at least to a large extend in an automated manner but also maintained once set-up. With the provisioning several properties of the cloud platform are defined, amongst which at least the properties relating to the infrastructure such as allocation of resources. These resources, e.g. processing power, memory usage, storage capacity, network capabilities and so on can either be physical resources but also virtual resources which are defined within a virtual machine. The method is performed in a computer network wherein most steps are performed or executed by one or more server computer and input is provided through one or more client computer. The client computer is most likely a computer remote from the server but in an example these could also be combined in a single computer which employs both server and client capabilities.

The scheme is preferably layered, hence comprises a plurality of blocks at several layers. These block are functional building blocks which define all or at least most of the properties needed for manually, automated or partly automated cloud platform provisioning. Thus preferably a (partly) automated process for provisioning of the cloud platform may be executed from such a scheme having one or preferably several functional building blocks. Not only do these functional building blocks contain information relating to the infrastructure, e.g. allocation of processing power, memory usage, storage capacity, network capabilities and so on, but also platform related information such as operating system related properties, database related properties, network settings and so on, and finally also the software or application related properties such as properties relating to users, software applications, licenses and so on. The functional building block consists of a plurality (preferably, but may also consists of a single) logical building block. The logical building block in its turn may comprise on or preferably plural capacity building blocks. The capacity building blocks define the low level cloud platform related resource allocations such as (virtual or physical) allocation of a predetermined resource capacity/footprint/size of CPU, memory, storage and network and preferably more infrastructure related aspect. One or preferably a plurality of these capacity building blocks form a logical building block. The logical building block however further consists of properties relating to the platform, e.g. the operating system, runtime related properties, middleware related properties, database (management) definitions and so on. One or preferably several of these logical building blocks define a functional building block. The functional building block however also contains information related to the provisioning of the software on the cloud platform, e.g. native cloud based software definitions, legacy cloud based software definitions, said legacy cloud based software definitions defining operational and functional requirements for said legacy software running on a cloud platform. The functional requirements and operational requirements define license requirements (such as key validation), operating system requirements or definitions, software application definitions, database definitions, network configurations, user configuration (e.g. active directory properties), etc. The functional building blocks preferably define the infrastructure capacity in an indirect manner by comprising the logical building blocks which in turn define technical building blocks. An example of such a layout could be the following; a functional building block F1 which defines one or several (software) applications and the required application license, functional building block F2 may define an amount of concurrent users. From these building blocks the following logical building blocks are defined; logical building block G1 which defines a virtual machine with a certain operating system, operating system license and a remote desktop application license for a certain amount of users. Logical building block G2 may define a virtual machine with a certain (similar or different) operating system with an operating system license and a fileserver application and license for a certain amount of users. Logical building block G3 may define a virtual machine with a certain (similar or different) operating system with an operating system license and a database application and license for a certain amount of users. From these logical building blocks the following capacity building blocks may be defined.

Differences between measured and threshold values may be used in a machine learning routine to further enhance or optimize the cloud platform configuration and operation. This may be implemented in the following manner. The functional business requirements may be optimized by the machine learning routines through a layered concept. More specifically, this the function business requirements may comprise multiple building blocks. With the machine learning routine the composition of the building blocks may be optimized. Each building block may consist of a logical building block whereas each such logical building block may comprise components or logical components wherein each of such components may be further optimized through the machine learning routine. On other words, functional business requirements may be optimized through layered machine learning routines on specific logic building blocks within the scope of said business requirements plus the scope of the logical components within the scope of the logical building blocks within the scope of said functional business requirements.

Some or all aspects of the invention may be implemented in a nonvolatile, tangible, non-transitory manner. Hence, the computer program product, electrical carrier signal, computer-readable non-volatile storage medium, communication device such as a smart phone, tablet, laptop or personal computer, digital distribution platform server for software on a communication devices, are preferably to be interpreted as non-transitory, physical, tangible articles of manufacture that are configured for a purpose to perform certain aspects of the invention. Hence, computer implemented methods are to be understood as computers having non-volatile memory comprising code to perform the method thus a device having a computer readable storage media.

As indicated some or all aspects of the invention may be implemented in a computer program product, i.e. a collection of computer program instructions stored or embodied on a non-transitory computer readable non-volatile storage carrier or device for execution by a computer. The instructions of the present invention may be in any interpretable or executable code mechanism, including but not limited to scripts, interpretable programs, dynamic link libraries or Java classes. The instructions can be provided as complete executable program, as modifications to existing programs or extensions, e.g. plugins, for existing programs. Moreover, parts of the processing of the present invention may be distributed over multiple computers, processors or cores, such for better performance, reliability, and/or cost. Storage devices suitable for storing computer program instructions include all forms of non-volatile memory, including by way of example semiconductor memory devices, such as EPROM , EEPROM , and flash memory devices, magnetic disks such as the internal and external hard disk drives and removable disks, magneto-optical disks and CD-ROM disks. The computer program product can be distributed on such a storage medium or device, or may be offered or downloaded through HTTP, FTP or similar mechanism using a server connected to a network such as the internet. Transmission of the computer program product by other methods such as e-mail is of course also possible. The skilled person will appreciate that the invention is not limited by the specific embodiments described within this specification and illustrated in the drawings, but may be practiced otherwise. The scope of the invention is only determined by the appended claims.

The present invention has now been described in accordance with several exemplary embodiments, which are intended to be illustrative in all aspects, rather than restrictive. Thus, the present invention is capable of many variations in detailed implementation, which may be derived from the description contained herein by a person ordinary skilled in the art. All such variations are considered to be within the scope and spirit of the present invention as defined by the following claims and their legal equivalents.

## Claims

1. A method of enabling one or more users to configure, employ and manage a cloud environment for providing cloud based services to a plurality of users of said cloud environment, said method being performed in a computer network comprising at least one client computer and at least one remote server, said method comprising the steps of:
- obtaining, by said remote computer, a list of resources of said at least one remote server;
- categorizing, by said remote computer, said list of resources in a first list of server resources comprising a plurality of server-elements defining at least a predetermined amount of CPU, memory, storage, as well as a second list of cloud based application resources comprising a plurality of requirement-elements defined by said cloud based applications;
- configuring, by said remote computer, for each of said requirement-elements of said second list, a weight factor defining an allocation requirement for said server-elements of said first list;
- generating, by said remote computer, a cloud configuration scheme for employing said cloud environment wherein said cloud configuration scheme comprises a plurality of functional building blocks each comprising a plurality of logical building blocks, each of said logical building blocks comprising a plurality of capacity building blocks, and wherein said capacity building blocks define at least said plurality of server-elements of said first list, wherein said the amount of resources of said plurality of server-elements of said first list are allocated on the basis of said respective weight factor;
- measuring, by said remote server, resource allocation usage of at least one cloud environment set-up through said cloud configuration scheme; and
- updating, by said remote server, said weight factor upon detecting said resource allocation usage exceeds a predefined threshold.

2. The method of claim 1, wherein said first list of server resources further comprises a predefined network bandwidth limit.

3. The method of claim 1 or 2, wherein said list of resources is further categorized by said remote computer in a third list of client resources comprising a plurality of client-elements defining at least a predetermined amount of CPU, memory, storage and network bandwidth resources.

4. The method according to one or more of the previous claims, wherein said step of measuring comprises:
- measuring, by said remote server, resource allocation usage of at least one of said plurality of server-elements of said first list.

5. The method according to one or more of the previous claims, wherein said step of updating further comprises:
- updating, by said remote server, a respective weight factor upon detecting said resource allocation usage corresponding to said respective weight factor to exceed a predefined threshold.

6. The method according to one or more of the previous claims, wherein said step of updating comprises iterated steps of updating in which said weight factor is stepwise increased or decreased.

7. The method according to one or more of the previous claims, wherein said step of updating further comprises:
- adapting, by said remote server, said capacity building blocks for increased accuracy of estimated resource allocation based on said historical comparison of said used resource allocation of said set-up cloud platform with said estimated resource allocation, and wherein in particular said estimated resource allocation is increased for one or more of the group consisting of: physical but preferably virtual CPU, memory, storage and network capacity resources.

8. The method according to one or more of the previous claims, wherein said functional building blocks further define software application vendor specific technical dependencies for operating said software application, as well as associated licensing and billing specifications.

9. The method according to one or more of the previous claims, wherein said logical building blocks further define operating system specific technical dependencies for operating said operating system, as well as associated licensing and billing specifications.

10. The method according to one or more of the previous claims, wherein said capacity building blocks further define host operating system specific technical dependencies for operating said host operating system, as well as associated licensing and billing specifications.

11. A computer program product loadable into non-volatile internal memory of a mobile communication device, wherein said computer program product comprises computer program code arranged for performing the method according to claim 1, and wherein said computer program product is preferably downloadable from a server of a telecommunication network.

12. An electrical carrier signal comprising the computer program product according to claim 11.

13. A computer-readable non-volatile storage medium comprising computer program code arranged for performing the method according to claim 1.

14. A communication device such as a smart phone, tablet, laptop or personal computer comprising non-volatile internal memory for storing and executing a computer program comprising computer program code configured for communication with a server for performing the method according to claim 1.

15. A digital distribution platform server for software on a communication device, wherein said platform comprises a non-volatile memory, being arranged for distribution of an application comprising a computer program product which comprises computer program code arranged for performing the method according to claim 1.
